# EUROPÄISCHE PATENTANMELDUNG

(11) **EP 4 725 370 A1**
(43) Veröffentlichungstag der Anmeldung: **15.04.2026**
(21) Anmeldenummer: 25207770.6
(22) Anmeldetag: 09.10.2025
(51) Int. Cl.: A47J 31/42, A47J 42/50

(54) **MAHLEINHEIT FÜR EINE GETRÄNKEZUBEREITUNGSVORRICHTUNG**

(30) Priorität: 14.10.2024 DE 102024129604
(71) Anmelder: Eugster/Frismag AG, 8580 Amriswil (CH); Miele & Cie. KG, 33332 Gütersloh (DE)
(72) Erfinder: Schröter, Nadja, 8570 Weinfelden (CH); Eberle, Rainer, 9000 St. Gallen (CH); Mamero, Thomas, 24105 Kiel (DE)
(74) Vertreter: Patent- und Rechtsanwälte Behrmann Wagner PartG mbB

(57) **Zusammenfassung**

Mahleinheit für eine Getränkezubereitungsvorrichtung, insbesondere eine Kaffee- und/oder Espressomaschine, umfassend eine, insbesondere wenigstens annähernd trichterförmige, Substratbevorratungseinheit (2) zur Aufnahme von Getränkesubstrat, insbesondere Kaffeebohnen, welche eine Substrateinfüllöffnung (3) aufweist, und umfassend ein Substrat-Mahlwerk (4) zum Mahlen von Getränkesubstrat, wobei die Substratbevorratungseinheit (2) mit einer Auslassöffnung (5) so an, bevorzugt über, dem Substrat-Mahlerwerk (4) angeordnet ist, dass Getränkesubstrat durch die Auslassöffnung (5) in das Substrat-Mahlwerk (4) überführbar ist, wobei die Substratbevorratungseinheit (2) ein die Auslassöffnung (5) überspannendes Deckelement (6) aufweist, welches derart angeordnet ist, dass zwischen dem Deckelement (6) und der Auslassöffnung (5) ein Spalt (7) besteht, durch welchen Getränkesubstrat führbar ist, wobei dass das Deckelement (6) an einer der Substrateinfüllöffnung (3) zugewandten Oberfläche (8.1) eine reibungsverringernde und/oder strömungsbeeinflussende Oberflächenstrukturierung aufweist.

## Beschreibung

Die vorliegende Erfindung betrifft eine Mahleinheit für eine Getränkezubereitungsvorrichtung nach dem Oberbegriff des Anspruchs 1, sowie eine Getränkezubereitungsvorrichtung, insbesondere eine Kaffee- und/oder Espressomaschine, mit einer Mahleinheit nach dem Oberbegriff des Anspruchs 12.

Aus dem Stand der Technik sind Mahleinheiten bekannt, die im Wesentlichen aus einer Substratbevorratungseinheit, insbesondere einem Bevorratungsbehälter für Kaffeebohnen, und einem Mahlwerk zum Mahlen von Getränkesubstrat zu Substratmehl, insbesondere einem Mahlwerk zum Mahlen von Kaffeebohnen zu Kaffeebohnenmehl, bekannt, die nicht ausschließlich aber bevorzugt als Teil, Baugruppen oder Komponente von Getränkezubereitungsvorrichtungen, insbesondere Kaffee- und/oder Espressomaschinen, zum Einsatz kommen. Dort dient die Mahleinheit dazu, ein möglichst optimales Getränk bereit zu stellen oder einen möglichst optimalen Brühvorgang des Getränkesubstrats oder Getränkesubstratmehls zu ermöglichen, indem das Getränkesubstrat frisch gemahlen und im frisch gemahlenen Zustand einer Brüheinheit der Getränkezubereitungsvorrichtung zugeführt oder zur Verfügung gestellt wird.

Um zu verhindern, dass beim Befüllen der Substratbevorratungseinheit oder bei Wartungsarbeiten ein Benutzer der Getränkezubereitungsvorrichtung mit seinen Fingern in das Mahlwerk gerät und verletzt wird, sind im Stand der Technik verschiedene Möglichkeiten vorgesehen, um einen Fingerschutz in der Mahleinheit oder der Substratbevorratungseinheit umzusetzen. Aus der DE 10 2016 105 702 A1 ist ein Fingerschutz bekannt, welche durch eine Verteilerplatte mit einem länglichen, abgeschrägten Grundkörper mit einer glatten Oberfläche ausgebildet wird. Die Verteilerplatte ist hierbei zentral in der Substratbevorratungseinheit über einem Verbindungsabschnitt, welcher die Substratbevorratungseinheit und das Mahlwerk verbindet, angeordnet. Bei der Durchführung eines Mahlvorgangs kann das Getränkesubstrat durch einen Spalt zwischen der Verteilerplatte und dem Verbindungsabschnitt in das Mahlwerk strömen, wobei das von oberhalb der Verteilplatte nachströmende Getränkesubstrat an der Oberfläche der Verteilerplatte abgleitet.

Nachteilig am Stand der Technik ist, dass durch die Reibung des nachrutschenden Getränkesubstrats an der Verteilerplatte, keine kontrollierte und/oder vorhersehbare Strömung des nachströmenden Getränkesubstrats, insbesondere der Kaffeebohnen, möglich ist, wodurch es zu Verwirbelungen bei der Verteilung des nachströmenden Getränkesubstrats in der Substratbevorratungseinheit kommen kann. Diese Verwirbelungen können wiederum den Strom des Getränkesubstrats in die Mahleinheit stören und zum Beispiel bei zeitgesteuerten Schaltungen der Mahleinheit dazu führen, dass die in das Mahlwerk überführe Menge an Getränkesubstrat zwischen Mahlvorgängen stark variiert.

Aufgabe der vorliegenden Erfindung ist es deshalb, eine Mahleinheit für eine Getränkezubereitungsvorrichtung, insbesondere eine Kaffee- und/oder Espressomaschine, vorzuschlagen, die die Nachteile im Stand der Technik überwindet und eine verbesserte Führung des Getränkesubstrats in der Substratbevorratungseinheit, besonders im Bereich des Fingerschutzes ermöglicht.

Diese Aufgabe wird im Hinblick auf die Mahleinheit mit den Merkmalen des Anspruchs 1 gelöst. Bezüglich der Getränkezubereitungsvorrichtung wird diese Aufgabe mit den Merkmalen des Anspruchs 12 gelöst.

Vorteilhafte Ausführungsformen sind Gegenstand der Unteransprüche, der Beschreibung, der Figurenbeschreibung und der Figuren.

Alle vorrichtungsmäßig offenbarten Merkmale sollen auch als verfahrensmäßig offenbart gelten und beanspruchbar sein, sowie umgekehrt.

Die Mahleinheit für eine Getränkezubereitungsvorrichtung, insbesondere eine Kaffee- und/oder Espressomaschine, umfasst eine, insbesondere wenigstens annähernd trichterförmige, Substratbevorratungseinheit zur Aufnahme von Getränkesubstrat, insbesondere Kaffeebohnen, welche eine Substrateinfüllöffnung aufweist, und umfasst ein Substrat-Mahlwerk zum Mahlen von Getränkesubstrat, wobei die Substratbevorratungseinheit mit einer Auslassöffnung so an, bevorzugt über, dem Substrat-Mahlerwerk angeordnet ist, dass Getränkesubstrat durch die Auslassöffnung in das Substrat-Mahlwerk überführbar ist, wobei die Substratbevorratungseinheit ein die Auslassöffnung überspannendes Deckelement aufweist, welches derart angeordnet ist, dass zwischen dem Deckelement und der Auslassöffnung ein Spalt besteht, durch welchen Getränkesubstrat führbar ist.

Erfindungsgemäß ist vorgesehen, dass das Deckelement an einer der Substrateinfüllöffnung zugewandten Oberfläche eine reibungsverringernde und/oder strömungsbeeinflussende Oberflächenstrukturierung aufweist.

Hierdurch wird vorteilhaft erreicht, dass bei der Durchführung eines Mahlvorgangs das Getränkesubstrat durch den Spalt und die Auslassöffnung in das Mahlwerk geführt werden kann, insbesondere durch reine Schwerkraftwirkung in das Mahlwerk einströmen kann. Das von oberhalb des Deckelements nachströmende Getränkesubstrat trifft dabei auf die der Substrateinfüllöffnung zugewandten Oberfläche des Deckelements, wobei es an der reibungsverringernden und/oder strömungsbeeinflussenden Oberflächenstrukturierung abgleitet und somit auf eine besser vorhersehbare und wiederholbare Weise geführt wird. Die Führung des nachströmenden Substrats bewirkt somit vorteilhaft eine Beruhigung des Getränkesubstratstroms, wodurch die Konstanz der Menge des in einem definierten Zeitraum geführten Getränkesubstrats verbessert wird.

Die Oberflächenstrukturierung kann hierbei verschiedenste Ausführungen aufweisen, welche vorteilhaft durch Unterbrechung der Oberfläche eine verringerte Haftreibung und/oder Strömungsbeeinflussung gegenüber dem nachrutschenden Getränkesubstrat bewirken, zum Beispiel durch Spalte, Rillen, Täler, Wellen, Berge, Kerben, Fräsungen, Stanzungen, Nieten oder Noppen. Die Oberflächenstrukturierung kann hierbei durch Materialabtragung oder -zufügung monolithisch bei der Herstellung des Deckelements ausgebildet werden, oder durch nachträglich an der Oberfläche befestige, zum Beispiel verklebte oder verschweißte Elemente, ausgebildet werden. Das Deckelement kann weiter vorteilhaft eine Beschichtung aufweisen, zum Beispiel eine Statik-verringernde Beschichtung, wobei die Beschichtung die Oberflächenstrukturierung wenigstens teilweise oder vollständig ausbilden oder mitausbilden kann.

Gemäß einer ersten vorteilhaften Ausführungsform kann vorgesehen sein, dass die Oberflächenstrukturierung durch eine Vielzahl von, insbesondere radial angeordneten, Rippen ausgebildet wird. Das Deckelement kann hierbei eine verschiedene Anzahl von Rippen aufweisen, wobei die Rippen insbesondere als auf der der Substrateinfüllöffnung zugewandten Oberfläche des Deckelements aufsitzende Stege und/oder Kämme ausgebildet sind. Das Deckelement ist bevorzugt mit einem annähernd runden Grundkörper ausgebildet, wobei die Rippen sich insbesondere radial von einem gemeinsamen Mittelpunkt erstrecken.

Gemäß einer weiteren vorteilhaften Ausführungsform kann vorgesehen sein, dass das Deckelement wenigstens annähernd kegelförmig und/oder mit in Richtung der Auslassöffnung geneigten Seitenflächen ausgebildet ist. Hierdurch kann die Führung des Getränkesubstrats weiterverbessert werden. Dabei ist sowohl eine Ausführung mit einem runden Grundkörper, als auch eine Ausführung mit einem polygonalen Grundkörper möglich.

Gemäß einer weiteren vorteilhaften Ausführungsform kann vorgesehen sein, dass das Deckelement eine, insbesondere zentrale, Öffnung aufweist, wobei ein Verbindungselement, insbesondere eine Schraube oder ein Schnappelement, durch die Öffnung geführt ist. Hierdurch ergeben sich vorteilhaft verschiedene Möglichkeiten das Deckelement in der Substratbevorratungseinheit zu befestigen.

Gemäß einer weiteren vorteilhaften Ausführungsform kann vorgesehen sein, dass die Substratbevorratungseinheit eine Haltevorrichtung zwischen der Auslassöffnung und dem Deckelement umfasst, welche eine Ausnehmung, insbesondere ein Schraubloch, aufweist, wobei das Verbindungselement durch die Öffnung mit der Ausnehmung verbunden, insbesondere verschraubt, ist. In anderen Worten ausgedrückt kann das Deckelement über das Verbindungselement mit der Haltevorrichtung verbunden, insbesondere verschraubt, werden. Eine Schraubverbindung ist dabei besonders bevorzugt ist, um ein einfaches und reversibles Lösen des Deckelements zu ermöglichen.

Gemäß einer weiteren vorteilhaften Ausführungsform kann vorgesehen sein, dass die Haltevorrichtung insbesondere drei, Stützarme umfasst, welche sich ausgehend von einem gemeinsamen Mittelpunkt, insbesondere ausgehend von der Ausnehmung, in radialer Richtung, bevorzugt geneigt, ganz besonders bevorzugt wenigstens annähernd mit derselben Neigung wie das Deckelement, bis an Seitenwände der Substratbevorratungseinheit erstrecken. Die Stützarme sind dabei vorteilhaft mit einer schmalen Breitenerstreckung und/oder einer größeren Höhenerstreckung als Breitenerstreckung ausgebildet. Das Getränkesubstrat kann hierbei zwischen den Stützarmen durchströmen, wodurch vorteilhaft kein maßgeblicher Einfluss der Haltevorrichtung auf die Führung des Getränkesubstrats besteht.

Gemäß einer weiteren vorteilhaften Ausführungsform kann vorgesehen sein, dass die Haltevorrichtung monolithisch an der Substratbevorratungseinheit, insbesondere an den Seitenwänden, ausgebildet ist. Diese Ausführungsform bewirkt eine besonders stabile Haltevorrichtung, wobei insbesondere durch die monolithische Ausführungsform Spalte und/oder Verbindungsstellen, in welchen sich Reste des bevorrateten Getränkesubstrats sammeln können, vermieden werden.

Gemäß einer weiteren vorteilhaften Ausführungsform kann vorgesehen sein, dass das Deckelement an einer in Richtung der Auslassöffnung gerichteten Oberfläche einen Kragen, insbesondere einen Dichtkragen, umfasst und/oder dass die Stützarme an dem Deckelement zugewandten Auflageflächen einen Vorsprung, insbesondere einen Dichtvorsprung, umfassen. Vorteilhaft liegt der Kragen an dem Vorsprung dichtend an und/oder steht dichtend im Eingriff mit dem Kragen, wodurch insbesondere die Stabilität umfangseitig und gegen senkrecht auf das Deckelement wirkende Kräfte erhöht wird. Des Weiteren wird hierdurch eine Positionierungshilfe ausgebildet, welche das Deckelement bei der Montage, bereits bevor durch das Verbindungselement eine Verbindung mit der Haltevorrichtung hergestellt ist, an seiner endgültigen Position fixiert.

Gemäß einer weiteren vorteilhaften Ausführungsform kann vorgesehen sein, dass der Öffnung ein weiteres Dichtelement zugeordnet ist, wobei das Dichtelement als Dichtstöpsel, zur dichtenden Anlage an einem Rand der Öffnung, ausgebildet ist und eine Einformung aufweist, in welcher das Verbindungselement, insbesondere ein Schraubkopf, wenigstens abschnittsweise aufgenommen ist. Hierdurch wird vorteilhaft die Öffnung derart abgedichtet, dass keine Reste von Getränkesubstrat in den Bereich der Öffnung gelangen und diesen Verschmutzen können.

Gemäß einer weiteren vorteilhaften Ausführungsform kann vorgesehen sein, dass angrenzend an die Öffnung, insbesondere senkrecht an einem Boden der Öffnung, Fortsätze ausgebildet sind, welche zur Herstellung einer Verbindung, insbesondere Steckverbindung, zwischen dem Deckelement und der Haltevorrichtung in Umfangsrichtung zwischen den Stützarmen angeordnet sind. Besonders bevorzugt ist eine Ausführung mit drei Stützarmen und drei Fortsätzen wobei in Umfangsrichtung des Deckelements abwechselnd Stützarme und Fortsätze aufeinander folgen. Hierdurch wird vorteilhaft bei der Montage des Deckelements bereits vor der Herstellung der Verbindung des Deckelements mit der Haltevorrichtung durch das Verbindungselement, eine Fixierung des Deckelements an der Haltevorrichtung erreicht.

Gemäß einer weiteren vorteilhaften Ausführungsform kann vorgesehen sein, dass die Auslassöffnung und/oder das Deckelement in der Substratbevorratungseinheit exzentrisch angeordnet sind. Das Deckelement kann dabei in der Längserstreckung und/oder Breitenerstreckung und/oder Höhenerstreckung der Substratbevorratungseinheit exzentrisch und/oder abseits des Mittelpunkts angeordnet sein. Die Auslassöffnung kann in der Breitenerstreckung und/oder Längenerstreckung exzentrisch und/oder abseits des Mittelpunkts angeordnet sein. Hierdurch kann die Positionierung der Auslassöffnung und des Deckelements an die Position des Mahlwerks angepasst werden, wodurch der Bauraum der Getränkezubereitungsvorrichtung besser und flexibler ausgenutzt werden kann. Eine zentrale Positionierung auf einer oder mehrerer der Erstreckungsebenen ist ebenso möglich.

Die oben genannte Aufgabe wird auch mit einer Getränkezubereitungsvorrichtung, insbesondere Kaffee- und/oder Espressomaschine, umfassend eine Mahleinheit nach einer der vorangehend erläuterten Ausführungsformen, gelöst.

Die erfindungsgemäße Mahleinheit und die erfindungsgemäße Getränkezubereitungsvorrichtung werden nachfolgend anhand von rein schematischen, Ausführungsbeispiele zeigenden Figuren, beispielhaft erläutert.
- Fig. 1a:: Draufsicht auf eine Mahleinheit in einer ersten Ausführungsform;
- Fig. 1b:: Seitliche Querschnittsansicht einer Mahleinheit in einer ersten Ausführungsform.
- Fig. 2a: Schematischer Darstellung einer Oberflächenstrukturierung in einer ersten Ausführungsform
- Fig. 2b: Schematischer Darstellung einer Oberflächenstrukturierung in einer zweiten Ausführungsform
- Fig. 2c: Schematischer Darstellung einer Oberflächenstrukturierung in einer dritten Ausführungsform
- Fig. 2d: Schematischer Darstellung einer Oberflächenstrukturierung in einer vierten Ausführungsform

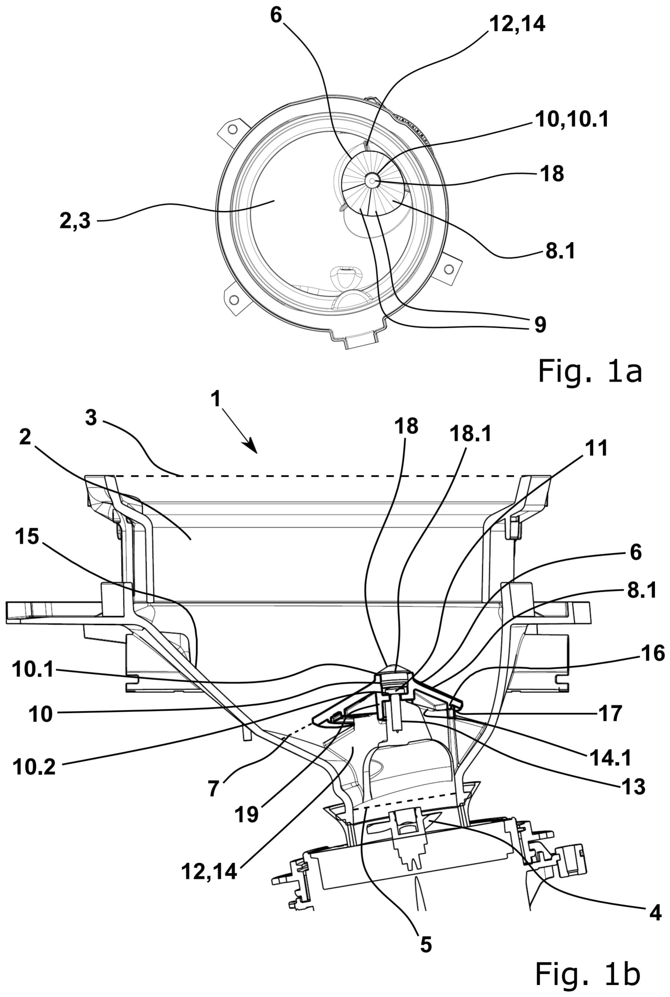

In den Fig. 1 a und b wird eine Mahleinheit 1 gezeigt, umfassend ein Substrat-Mahlwerk 4, welches dazu eingerichtet ist Getränkesubstrat zu einem Getränkesubstratmehl zu mahlen. Des Weiteren umfasst die Mahleinheit 1 eine Substratbevorratungseinheit 2 mit Seitenwänden 15, welche insbesondere annähernd trichterförmig ausgebildet ist.

Die Substratbevorratungseinheit 2 weist eine Substrateinfüllöffnung 3 auf, durch welche Getränkesubstrat in die Substratbevorratungseinheit 2 eingefüllt werden kann. Der Substratbevorratungseinheit 2 kann vorteilhaft ein, bevorzugt aufklappbarer oder vollständig abnehmbarer, Deckel zugeordnet sein. Die Substratbevorratungseinheit 2 ist an, bevorzugt über, dem Substrat-Mahlwerk 4 angeordnet, wobei die Substratbevorratungseinheit 2 eine Auslassöffnung 5 aufweist, über welche sie derart mit dem Substrat-Mahlwerk 4 verbunden ist, dass Getränkesubstrat aus der Substratbevorratungseinheit 2 in das Substrat-mahlwerk 4, bevorzugt rein durch die Schwerkraft, überführt werden kann. Die Auslassöffnung 5 ist hierbei exzentrisch zur Breitenerstreckung und/oder zur Längenerstreckung der Substratbevorratungseinheit 2 angeordnet, eine zentrale Anordnung ist allerdings ebenso möglich.

Über der Auslassöffnung 5 ist eine Haltevorrichtung 12 an den Seitenwänden 15 der Substratbevorratungseinheit 2, insbesondere monolithisch, ausgebildet, welche Stützarme 14 umfasst, die sich radial ausgehend von einer, insbesondere zentralen, Ausnehmung 13 in Richtung der Seitenwände 15 erstrecken. An der Haltevorrichtung 12 ist ein Deckelement 6 angeordnet, welches eine, insbesondere zentrale, Öffnung 10 aufweist, durch welche ein Verbindungselement 11 in die Ausnehmung 13 geführt, insbesondere mit dieser verschraubt oder geschnappt, ist. Der Öffnung 10 ist dabei ein Dichtelement 18 zugeordnet, welches als Dichtstopfen ausgebildet ist und an einem Rand 10.1 der Öffnung 10 dichtend anliegt und des Weiteren eine Einformung 18.2 aufweist, welche das Verbindungselement 11 wenigstens abschnittsweise, insbesondere einen Schraubkopf eines als Schraube ausgebildeten Verbindungselements 11, aufnimmt.

Senkrecht an einem Boden 10.2 der Öffnung 10 sind Fortsätze 19 ausgebildet, welche entlang der Höhenerstreckung der Stützarme 14 an diesen anliegen, wobei vorteilhaft entlang der Umfangsrichtung des Deckelements 6 abwechselnd die Stützarme 14 und Fortsätze 19 angeordnet sind. Zwischen dem Deckelement 6 und der Auslassöffnung 5 besteht ein Spalt 7, welcher derart ausgebildet ist, dass Getränkesubstrat den Spalt 7 passieren kann, um in das Substrat-Mahlwerk 4 überführt zu werden. Das Deckelelement 6 ist exzentrisch zur Breitenerstreckung und/oder Längenerstreckung der Substratbevorratungseinheit 2 angeordnet, wobei die exzentrische Anordnung vorteilhaft der exzentrischen Anordnung der Auslassöffnung 5 entspricht. Auch für das Deckelement 6 ist eine zentrale Positionierung ebenso möglich.

Das Deckelement 6 ist bevorzugt annähernd kegelförmig und/oder mit in Richtung der Auslassöffnung 5 geneigten Seiten ausgebildet, wobei ein runder Grundkörper bevorzugt ist. Andere Ausführungsformen, zum Beispiel mit einem polygonalen Grundkörper, sind ebenso denkbar. Auf einer der Substrateinfüllöffnung 3 zugewandten Oberfläche 8.1 weist das Deckelement 6 eine reibungsverringernde und/oder strömungsbeeinflussende Oberflächenstrukturierung auf, welche in diesem Ausführungsbeispiel durch Rippen 9 ausgebildet ist, welche insbesondere als in Richtung der Substrateinfüllöffnung 3 erhabene Stege ausgebildet sind. Die Rippen 9 erstrecken sich bevorzugt in radialer Richtung ausgehend von einem gemeinsamen Mittelpunkt und/oder ausgehend von der Öffnung 10.

An einer der Auslassöffnung 5 zugewandten Oberfläche 8.2 ist, insbesondere in Umfangsrichtung, ein Kragen 16 am Deckelement 6 ausgebildet, wobei an den Stützarmen 14 an dem Deckelement 6 zugewandten Auflageflächen 14.1 Vorsprünge 17 ausgebildet sind. Der Kragen 16 liegt an den Vorsprüngen 17 an und/oder greift in diesen ein, wodurch das Deckelement 6 während der Montage bereits vor der Befestigung durch das Verbindungselement 11 in seiner Position fixiert wird und das Deckelement 6 insbesondere in radialer Richtung und/oder Umfangsrichtung und/oder gegen senkrecht auf das Deckelement 6 wirkende Kraftweinwirkungen stabilisiert wird.

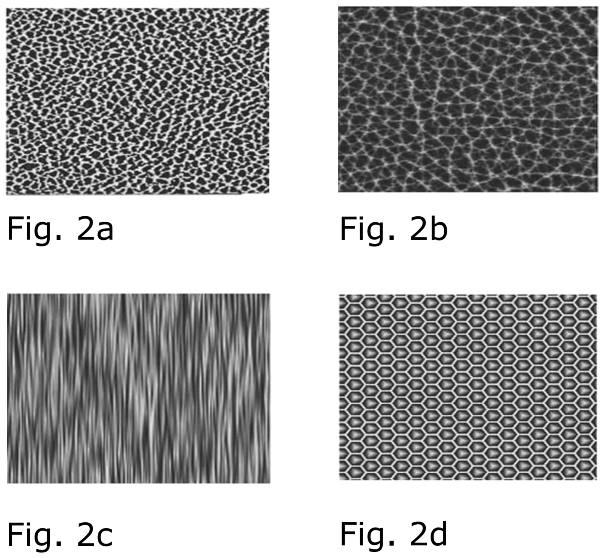

In der Fig. 2a, 2b, 2c und 2d werden rein schematisch weitere mögliche Ausführungsformen dargestellt, wie die Oberflächenstrukturierung, insbesondere durch eine Unterbrechung der Oberfläche, reibungsverringernd und/oder strömungsbeeinflussend am Deckelement ausgebildet sein können.

### Bezugszeichen

- 1: Mahleinheit
- 2: Substratbevorratungseinheit
- 3: Substrateinfüllöffnung
- 4: Substrat-Mahlwerk
- 5: Auslassöffnung
- 6: Deckelement
- 7: Spalt
- 8.1: Substrateinfüllöffnung zugewandte Oberfläche des Deckelements
- 8.2: Auslassöffnung zugewandte Oberfläche des Deckelements
- 9: Rippen
- 10: Öffnung
- 10.1: Rand der Öffnung
- 10.2: Boden der Öffnung
- 11: Verbindungselement
- 12: Haltevorrichtung
- 13: Ausnehmung
- 14: Stützarme
- 14.1: Auflagefläche
- 15: Seitenwände
- 16: Kragen
- 17: Vorsprung
- 18: Dichtelement
- 18.1: Einformung
- 19: Fortsätze

## Patentansprüche

1. Mahleinheit für eine Getränkezubereitungsvorrichtung, insbesondere eine Kaffee- und/oder Espressomaschine,
umfassend eine, insbesondere wenigstens annähernd trichterförmige, Substratbevorratungseinheit (2) zur Aufnahme von Getränkesubstrat, insbesondere Kaffeebohnen, welche eine Substrateinfüllöffnung (3) aufweist,
und umfassend ein Substrat-Mahlwerk (4) zum Mahlen von Getränkesubstrat, wobei die Substratbevorratungseinheit (2) mit einer Auslassöffnung (5) so an, bevorzugt über, dem Substrat-Mahlerwerk (4) angeordnet ist, dass Getränkesubstrat durch die Auslassöffnung (5) in das Substrat-Mahlwerk (4) überführbar ist,
wobei die Substratbevorratungseinheit (2) ein die Auslassöffnung (5) überspannendes Deckelement (6) aufweist, welches derart angeordnet ist, dass zwischen dem Deckelement (6) und der Auslassöffnung (5) ein Spalt (7) besteht, durch welchen Getränkesubstrat führbar ist,
**dadurch gekennzeichnet,**
**dass** das Deckelement (6) an einer der Substrateinfüllöffnung (3) zugewandten Oberfläche (8.1) eine reibungsverringernde und/oder strömungsbeeinflussende Oberflächenstrukturierung aufweist.

2. Mahleinheit nach Anspruch 1,
**dadurch gekennzeichnet,**
**dass** die Oberflächenstrukturierung durch eine Vielzahl von, insbesondere radial angeordneten, Rippen (9) ausgebildet wird.

3. Mahleinheit nach einem der Ansprüche 1 oder 2,
**dadurch gekennzeichnet,**
**dass** das Deckelement (6) wenigstens annähernd kegelförmig und/oder mit in Richtung der Auslassöffnung (5) geneigten Seitenflächen ausgebildet ist.

4. Mahleinheit nach einem der Ansprüche 1 bis 3,
**dadurch gekennzeichnet,**
**dass** das Deckelement (6) eine, insbesondere zentrale, Öffnung (10) aufweist, wobei ein Verbindungselement (11), insbesondere eine Schraube, durch die Öffnung (10) geführt ist.

5. Mahleinheit nach Anspruch 4,
**dadurch gekennzeichnet,**
**dass** die Substratbevorratungseinheit (2) eine Haltevorrichtung (12) zwischen der Auslassöffnung (5) und dem Deckelement (6) umfasst, welche eine Ausnehmung (13), insbesondere ein Schraubloch, aufweist, wobei das Verbindungselement (11) durch die Öffnung (10) mit der Ausnehmung (13) verbunden, insbesondere verschraubt, ist.

6. Mahleinheit nach Anspruch 5,
**dadurch gekennzeichnet,**
**dass** die Haltevorrichtung (12), insbesondere drei, Stützarme (14) umfasst, welche sich ausgehend von einem gemeinsamen Mittelpunkt, insbesondere ausgehend von der Ausnehmung (13), in radialer Richtung, bevorzugt geneigt, bis an Seitenwände (15) der Substratbevorratungseinheit (2) erstrecken.

7. Mahleinheit nach einem der Ansprüche 5 oder 6,
**dadurch gekennzeichnet,**
**dass** die Haltevorrichtung (12) monolithisch an der Substratbevorratungseinheit (2), insbesondere an den Seitenwänden (15), ausgebildet ist.

8. Mahleinheit nach einem der Ansprüche 5 bis 7,
**dadurch gekennzeichnet,**
**dass** das Deckelement (6) an einer in Richtung der Auslassöffnung (5) gerichteten Oberfläche (8.2) einen Kragen (16), insbesondere einen Dichtkragen, umfasst und/oder dass die Stützarme (14) an dem Deckelement (6) zugewandten Auflageflächen (14.1) einen Vorsprung (17), insbesondere einen Dichtvorsprung, umfassen.

9. Mahleinheit nach einem der Ansprüche 4 bis 8,
**dadurch gekennzeichnet,**
**dass** der Öffnung (10) ein weiteres Dichtelement (18) zugeordnet ist, wobei das Dichtelement (18) als Dichtstöpsel, zur dichtenden Anlage an einem Rand der Öffnung (10.1), ausgebildet ist und eine Einformung (18.1) aufweist, in welcher das Verbindungselement (11), insbesondere ein Schraubkopf, wenigstens abschnittsweise aufgenommen ist.

10. Mahleinheit nach einem der Ansprüche 4 bis 9,
**dadurch gekennzeichnet,**
**dass** angrenzend an die Öffnung (10), insbesondere senkrecht an einem Boden (10.2) der Öffnung (10), Fortsätze (19) ausgebildet sind, welche zur Herstellung einer Verbindung, insbesondere Steckverbindung, zwischen dem Deckelement (6) und der Haltevorrichtung (12) in Umfangsrichtung zwischen den Stützarmen (14) angeordnet sind.

11. Mahleinheit nach einem der Ansprüche 1 bis 10,
**dadurch gekennzeichnet,**
**dass** die Auslassöffnung (5) und/oder das Deckelement (6) in der Substratbevorratungseinheit (2) exzentrisch angeordnet sind.

12. Getränkezubereitungsvorrichtung, insbesondere Kaffee- und/oder Espressomaschine, umfassend eine Mahleinheit (1) nach einem der Ansprüche 1 bis 11.
